# DEMANDE DE BREVET EUROPEEN

(11) **EP 3 205 528 A1**
(43) Date de publication de la demande: **16.08.2017**
(21) Numéro de dépôt: 17154816.7
(22) Date de dépôt: 06.02.2017
(51) Int. Cl.: B60L 5/24, G01N 21/88, G06T 7/00, B60M 1/28

(54) **PROCEDE, DISPOSITIF ET SYSTEME DE DETECTION DE DEFAUT(S) D'UN PANTOGRAPHE D'UN VEHICULE EN MOUVEMENT SUR UNE VOIE FERREE**

(30) Priorité: 09.02.2016 FR 1651029
(71) Demandeur: SNCF RESEAU, 93418 La Plaine Saint-Denis CEDEX (FR); Globalsensing Technologies, 21000 Dijon (FR)
(72) Inventeur: RIVERO, Alain, 75013 PARIS (FR); PAINDAVOINE, Michel, 21370 PLOMBIERES LES DIJON (FR); BRUNEAU, Xavier, 78000 VERSAILLES (FR)
(74) Mandataire: Pontet Allano & Associes

(57) **Abrégé**

L'invention concerne un procédé (100) de détection de défaut(s) d'un pantographe d'un véhicule ferroviaire, ledit procédé (100) comprenant les étapes suivantes :
- captation (104) d'au moins une image dudit pantographe ;
- analyse (106) de ladite image par un réseau neuronal préalablement entraîné pour la détection de défaut(s) de pantographes à partir d'images de défaut(s) préalablement captées ;
caractérisé en ce que le réseau neuronal est mémorisé *in situ* au niveau du site de captation, l'étape (106) d'analyse étant réalisée *in situ* sur ledit site de captation.

Elle concerne également un dispositif de détection mettant en oeuvre un tel procédé, et un système et une voie ferrée équipés d'un tel dispositif de détection.

## Description

La présente invention concerne un procédé de détection de défaut(s) d'un pantographe d'un véhicule ferroviaire en mouvement sur une voie ferrée. Elle concerne également un dispositif et un système mettant en oeuvre un tel procédé, et une voie ferrée équipée d'un tel dispositif ou d'un tel système

Le domaine de l'invention est le domaine des dispositifs de surveillance de l'état de dégradation d'un pantographe.

### Etat de la technique

Actuellement, la détection des défauts d'un pantographe d'un véhicule ferroviaire peut se faire par inspection visuelle, ce qui est long, peu ergonomique et peu efficace. De plus, une telle inspection n'est possible que lorsque le véhicule est à l'arrêt.

Il existe également des systèmes de détection mettant en oeuvre des caméras agencées pour capter des images du pantographe. Ces capteurs sont en communication permanente avec un serveur central distant et transmettent les images captées vers ce serveur. Ce serveur central exécute un logiciel qui analyse les images reçues à partir de données décrivant le pantographe et mémorisées dans une base de données. Un opérateur, spécifiquement formé, vérifie ensuite les résultats fournis par le serveur et évalue la présence ou non d'un défaut.

Cependant, ces systèmes de détection ne sont pas réactifs. Avec ces systèmes, le temps de détection d'un défaut du pantographe peut prendre une, voire plusieurs, minute(s). Or, un train circulant à 230 km/h parcourt environ 4km par minute. Par conséquent, un défaut au niveau du pantographe peut causer la destruction de 4km de caténaire, uniquement pendant le temps de détection du défaut !

De plus, les systèmes de détection actuels ne fonctionnent pas lorsque la communication entre la caméra et le serveur distant est coupée.

Enfin, les systèmes de détection actuels sont dépendants de l'appréciation d'un opérateur dédié, spécifiquement formé pour cette tâche. Ce qui diminue encore plus le temps de réaction et est coûteux en termes de formation et de personnel.

Un but de la présente invention est de remédier à ces inconvénients.

Un autre but de l'invention est de proposer un procédé, dispositif et système de détection de défaut(s) d'un pantographe plus réactif.

Il est aussi un autre but de l'invention de proposer un procédé, dispositif et système de détection de défaut(s) d'un pantographe moins coûteux en termes de formation et de main d'oeuvre.

Encore un autre but de l'invention est de proposer un procédé, dispositif et système de détection de défaut(s) d'un pantographe plus efficace.

### Exposé de l'invention

L'invention permet d'atteindre au moins l'un de ces buts par un procédé de détection de défaut(s) d'un pantographe d'un véhicule ferroviaire en mouvement sur une voie ferrée, ledit procédé comprenant au moins une itération d'une phase de détection comprenant les étapes suivantes :
- captation d'au moins une image dudit pantographe au niveau d'au moins un site, dit de captation, se trouvant le long de ladite voie ferrée, lors du passage dudit véhicule ;
- fourniture d'au moins une image captée à un réseau neuronal préalablement entraîné pour la détection de défaut(s) de pantographes à partir d'images de défaut(s) préalablement captées ; et
- analyse de ladite image par ledit réseau neuronal, ladite analyse fournissant une donnée, dite de défaut, relative à la présence ou non d'un défaut au niveau dudit pantographe.

Ainsi, le procédé selon l'invention propose de réaliser une détection d'un défaut du pantographe avec un réseau neuronal préalablement et spécifiquement entraîné. Par conséquent, le procédé selon l'invention ne nécessite pas l'intervention d'un opérateur spécialement formé à cette tâche, voire pas d'intervention de la part d'un quelconque opérateur, lors de la détection d'un défaut d'un pantographe. Par conséquent, la détection d'un défaut peut être réalisée de manière plus rapide et plus réactive.

De plus, le procédé selon l'invention ne nécessitant pas de formation d'un opérateur, il est moins coûteux en termes de formation et de main d'oeuvre.

En outre, le réseau neuronal utilisé, étant préalablement entraîné, permet une détection plus efficace des défauts d'un pantographe.

Le procédé selon l'invention peut en outre comprendre une étape de détection de présence d'un véhicule ferroviaire lors du passage d'un véhicule ferroviaire au niveau du site de captation, la phase de détection d'un défaut étant déclenchée suite à ladite étape de détection de présence.

Une telle étape de détection de présence peut être réalisée par un moyen de détection de véhicule ferroviaire, tel qu'un ou plusieurs accéléromètres agencés au niveau de la voie ferrée par exemple.

Alternativement, une telle détection peut être réalisée par un réseau neuronal entrainé pour reconnaitre un véhicule ferroviaire à partir d'images fournie par une caméra par exemple.

Dans une version particulièrement préférée du procédé selon l'invention, le réseau neuronal peut être mémorisé *in situ* au niveau du site de captation. Dans ce cas, l'étape d'analyse peut avantageusement être réalisée *in situ* sur ledit site de captation.

Dans cette version, la détection d'un défaut d'un pantographe est réalisée directement au niveau du site de captation. Ainsi, le procédé selon l'invention ne nécessite pas une communication avec un site central pour détecter un défaut, contrairement aux systèmes de l'état de la technique. Autrement dit, la détection d'un défaut d'un pantographe peut être réalisée à tout moment, même lorsqu'il n'existe pas de connexion avec un site central.

Avantageusement, la phase de détection peut comprendre une transmission de l'image du pantographe, captée par un premier site de captation, à un deuxième site de captation. Le deuxième site de captation peut alors réaliser une étape d'analyse pour vérifier le résultat de l'étape d'analyse réalisée sur ledit premier site de captation.

Une telle version permet d'améliorer les résultats de détection d'un défaut d'un pantographe puisque le deuxième site de captation vérifie le résultat de l'étape d'analyse réalisée sur le premier site de captation.

Suivant une autre version non limitative, la phase de détection peut comprendre une transmission de l'image du pantographe, captée au niveau d'un premier site de captation, à un deuxième site de captation, l'étape d'analyse étant réalisée sur ledit deuxième site de captation.

Une telle version permet de diminuer le coût de mise en oeuvre du procédé selon l'invention car, dans cette version, il n'est pas nécessaire d'équiper chaque site de détection des moyens informatiques exécutant le réseau neuronal.

Au moins deux sites de captation peuvent être connectés au travers d'un réseau de communication sans fil, tel que le réseau cellulaire, ou au travers d'une connexion sans fil dédiée.

Alternativement, au moins deux sites de captation peuvent être connectés au travers d'une connexion filaire.

Avantageusement, le procédé selon l'invention peut être mis en oeuvre sur plusieurs sites de captation, distribués le long de la voie ferrée, le réseau neuronal utilisé étant commun à au moins deux, en particulier à l'ensemble, desdits sites de captation.

Ainsi, le procédé selon l'invention permet d'obtenir des résultats répétitifs ne dépendant pas du site de captation, le niveau de détection de chaque site de captation étant sensiblement identique.

Suivant une caractéristique avantageuse, lorsque le réseau neuronal signale la présence d'un défaut, le procédé selon l'invention peut comprendre une étape de classification dudit défaut dans une classe parmi plusieurs classes prédéterminées.

En effet, chaque donnée de défaut, fournie par le réseau neuronal qui signale la présence d'un défaut, peut être préalablement attribuée à une classe en fonction du niveau de gravité du défaut. Ainsi, lorsque le réseau neuronal fournit une donnée signalant un défaut, le défaut détecté peut être classifié en fonction de la donnée de défaut qui le représente.

Le procédé selon l'invention peut en outre comprendre une phase d'apprentissage, réalisant un entraînement du réseau neuronal à partir d'images de défauts de pantographe préalablement captées, ladite phase d'apprentissage étant réalisée préalablement à la première itération de la phase de détection.

Avantageusement, la phase d'apprentissage peut être réalisée au niveau d'un site central. Le réseau neuronal peut ensuite être chargé dans un calculateur ou un processeur équipant chaque site de captation, avant ou après l'installation sur le site de captation.

Dans une version particulièrement avantageuse, le procédé selon l'invention peut comprendre au moins une itération d'une phase de mise à jour du réseau neuronal, réalisant une mise à jour du réseau neuronal à partir de nouveaux défauts détectés.

Ainsi, le réseau neuronal est en constant apprentissage, et se complète au fur et à mesure, dans le temps. Ainsi, il permet de réaliser une détection plus efficace, plus précise et plus complète des défauts d'un pantographe.

Pour ce faire, de nouvelles images de défauts connus, ou des images de nouveaux défauts détectés peuvent être utilisées pour réaliser une telle mise à jour.

Les images utilisées pour réaliser la mise à jour peuvent comprendre des images captées au niveau d'au moins un site de captation, ou des images acquises par un opérateur, par exemple lors de tests en laboratoire.

La phase de mise à jour peut être réalisée à chaque détection de défaut ou à une fréquence prédéterminée.

Ainsi, le réseau neuronal se renforce, s'adapte et s'améliore à fréquence prédéterminée, ou à chaque détection d'un défaut.

Préférentiellement, la phase de mise à jour peut être réalisée sur un site central distant de chaque site de captation, le réseau neuronal mis à jour étant transmis vers chaque site de captation après mise à jour.

Ainsi, la détection d'un défaut sur un premier site de captation entraîne une mise à jour du réseau neuronal de sorte qu'un deuxième site de captation, se trouvant à des centaines de kilomètres dudit premier site de captation et utilisant le même réseau neuronal, peut en bénéficier même si ledit défaut n'a pas été constaté/détecté au niveau dudit deuxième site de captation. Cette caractéristique permet à tous les sites de captation de bénéficier de l'«expérience » individuelle de chaque site de captation.

Dans ce cas, chaque site de captation est en communication avec le site central, préférentiellement au travers d'un réseau de communication sans fil tel que le réseau cellulaire.

La phase de détection peut en outre comprendre une étape d'analyse d'au moins un paramètre relatif audit véhicule, à partir d'au moins une image dudit véhicule, choisi parmi les suivants :
- un numéro dudit véhicule,
- une composition dudit véhicule, ou
- un état dudit véhicule ou d'une voiture dudit véhicule.

Le procédé selon l'invention peut comprendre une signalisation, en particulier automatisée, d'un défaut constaté :
- au conducteur du véhicule,
- à une balise se trouvant dans ledit véhicule,
- à un opérateur, etc.

La signalisation du défaut est avantageusement réalisée au travers d'un réseau de communication sans fil ou au travers d'une connexion sans fil.

L'étape de signalisation peut comprendre une transmission d'une donnée informant le défaut constaté.

Alternativement, ou en plus, l'étape de signalisation peut comprendre une transmission d'une donnée de commande, vers le véhicule, modifiant le fonctionnement du véhicule, tel que par exemple :
- une donnée de commande de ralentissement, en particulier de freinage, du véhicule,
- une donnée d'abaissement du pantographe de sorte qu'il ne soit plus en contact avec la caténaire,
- etc.

La donnée de commande peut être exécutée automatiquement dans le véhicule, ou après validation d'un conducteur du véhicule.

Suivant un autre aspect de l'invention, il est proposé un dispositif de détection de défaut(s) d'un pantographe d'un véhicule ferroviaire en mouvement sur une voie ferrée, prévu pour être agencé sur un site de captation se trouvant au niveau de ladite voie ferrée, ledit dispositif comprenant :
- une caméra pour capter au moins une image dudit pantographe lors du passage dudit véhicule par ledit site de captation ;
- au moins un processeur exécutant un réseau neuronal préalablement entraîné pour la détection de défaut(s) de pantographes à partir d'images de défaut préalablement captées, pour analyser au moins une image captée et fournir une donnée, dite de défaut, relative à la présence ou non d'un défaut au niveau dudit pantographe.

Plus généralement, le dispositif selon l'invention est équipé des moyens pour mettre en oeuvre une combinaison quelconque des fonctions/étapes mises en oeuvre au niveau du site de captation, et décrites plus haut.

En particulier, le dispositif selon l'invention peut comprendre un moyen de communication sans fil avec un site central, respectivement avec un autre site de captation et/ou avec le véhicule ferroviaire, pour émettre et/ou recevoir des données vers/depuis ledit site central, respectivement ledit site de captation et/ou ledit véhicule ferroviaire.

Le système selon l'invention peut comprendre au moins un moyen de production d'énergie autonome, de type solaire ou éolien pour alimenter ledit système.

Le système peut en outre comprendre une batterie alimentée par le moyen de production d'énergie.

En outre, le système selon l'invention peut être agencé pour être alimenté par un signal basse tension, par exemple 24V, ou par un signal haute tension, par exemple 220V. Pour ce faire, le système selon l'invention peut comprendre un convertisseur de tension pour convertir le signal haute tension en un signal basse tension.

Préférentiellement, la caméra peut être une caméra infrarouge. La caméra peut alternativement être une caméra CCD ou CMOS.

La caméra peut être munie d'un éclairage. En particulier la caméra peut être munie d'un flash infrarouge.

Le système selon l'invention peut en outre comprendre, pour au moins un site de captation, au moins un moyen de détection de présence d'un véhicule ferroviaire lors du passage d'un véhicule ferroviaire au niveau du site de captation. Dans ce cas, la caméra peut être déclenchée/activée lorsque le moyen de détection de présence signale la présence d'un véhicule ferroviaire.

Un tel moyen de détection de présence peut par exemple comprendre un ou plusieurs accéléromètres, en particulier agencés au niveau de la voie ferrée.

Alternativement, le moyen de détection de présence peut comprendre un réseau neuronal entrainé pour reconnaitre un véhicule ferroviaire à partir de signaux mesurés au niveau du site de captation, par exemple des signaux d'accélération mesurés par un ou plusieurs accéléromètres, ou d'images captées par une caméra dédiée ou par la caméra utilisée pour capter des images du pantographe.

Suivant encore un autre aspect de l'invention, il est proposé un système de détection de défaut(s) d'un pantographe d'un véhicule ferroviaire en mouvement sur une voie ferrée, comprenant au moins deux dispositifs selon l'invention, agencés sur autant de sites de captation distribués le long d'une voie ferrée.

Les dispositifs de captation peuvent être disposés sur des poteaux déjà présents le long de la voie ferrée.

Au moins deux dispositifs de détection peuvent communiquer entre eux de manière sans fil.

Au moins un, en particulier chaque, dispositif de détection peut communiquer, de manière sans fil, avec un site central.

Suivant encore un autre aspect de l'invention, il est proposé une voie ferrée équipée :
- d'au moins un dispositif selon l'invention ; ou
- d'un système selon l'invention.

Le réseau de communication sans fil utilisé entre les dispositifs de détection, et/ou entre le site central et au moins un dispositif de détection peut être le réseau GPRS, 3G, 4G, 5G, etc. Plus généralement, le réseau de communication sans fil peut être le réseau cellulaire.

### Description des figures et modes de réalisation

D'autres avantages et caractéristiques apparaîtront à l'examen de la description détaillée d'exemples de réalisation nullement limitatifs, et des dessins annexés sur lesquels :
- la FIGURE 1 est une représentation schématique d'un premier exemple de réalisation non limitatif d'un procédé selon l'invention ;
- la FIGURE 2 est une représentation schématique d'un deuxième exemple de réalisation non limitatif d'un procédé selon l'invention ;
- la FIGURE 3 est une représentation schématique d'un exemple de réalisation d'un dispositif de détection selon l'invention ;
- la FIGURE 4 est une représentation schématique du dispositif de la FIGURE 3 sur un site de captation ; et
- la FIGURE 5 est une représentation schématique d'un exemple de réalisation d'un système de détection selon l'invention.

Il est bien entendu que les modes de réalisation qui seront décrits par la suite ne sont nullement limitatifs. On pourra notamment imaginer des variantes de l'invention ne comprenant qu'une sélection de caractéristiques décrites, par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels, si cette partie est uniquement suffisante pour conférer un avantage technique ou pour différencier l'invention par rapport à l'état de la technique antérieur.

Sur les figures, les éléments communs à plusieurs figures conservent la même référence.

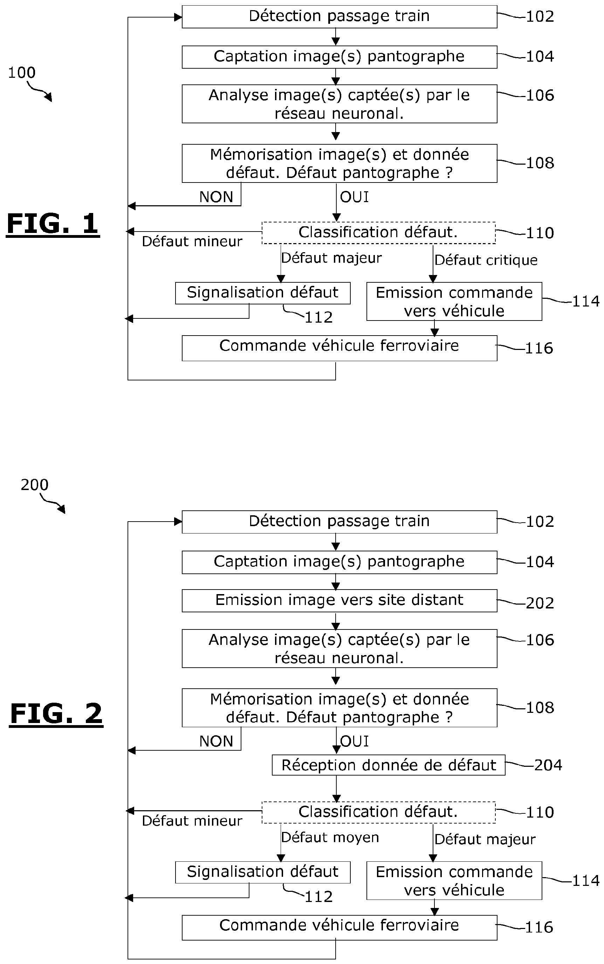

La FIGURE 1 est une représentation schématique d'un premier exemple de réalisation non limitatif du procédé selon l'invention.

Le procédé 100 de la FIGURE 1 comprend une étape 102 de détection du passage d'un véhicule ferroviaire, tel qu'un train. Une telle détection peut être réalisée par un moyen de détection de présence standard.

Lors d'une étape 104, une ou plusieurs images du pantographe du train sont captée(s), par exemple par une caméra.

Lors d'une étape 106, la ou les images captée(s) lors de l'étape 104 est(sont) fournie(s) à un processeur exécutant un réseau neuronal préalablement entraîné avec une multitude d'images de défauts de pantographe. Le réseau neuronal analyse la ou les image(s) fournie(s). L'analyse détermine une donnée de défaut ne signalant aucun défaut, le procédé est arrêté jusqu'à une prochaine itération.

Lors d'une étape 108, la ou les images captée(s) lors de l'étape 104 est(sont) mémorisée(s) dans une base de données en association avec la donnée de défaut déterminée pour cette(ces) image(s) pendant l'étape 106, en vue, par exemple, de leur utilisation ultérieure pour une mise à jour du réseau neuronal.

Lorsqu'à l'étape 106, le réseau neuronal fournit une donnée de défaut signalant un défaut, alors une étape optionnelle 110 réalise une classification du défaut dans une catégorie de défaut. Par exemple, le défaut identifié peut être classé dans la catégorie :
- « défaut mineur » signalant la détection d'un défaut non critique ne nécessitant aucune intervention ;
- « défaut majeur » signalant un défaut de gravité majeure nécessitant une intervention lorsque le train aura terminé son trajet ; ou
- « défaut critique » signalant un défaut critique nécessitant une intervention urgente.

Lorsque le défaut détecté est un défaut mineur, alors aucune intervention n'est réalisée.

Lorsque le défaut détecté est un défaut majeur, alors une étape 112 signale le défaut à un centre de maintenance ou au conducteur du train, ou encore à un site central, pour que le défaut puisse être corrigé à la fin du trajet du train.

Lorsque le défaut détecté est un défaut critique, alors une étape 114 émet un signal de commande vers le train, en vue de modifier le comportement du train. Un signal de commande peut déclencher :
- un arrêt ou un ralentissement du train, ou
- un abaissement du pantographe de sorte qu'il n'est plus en contact avec la caténaire.

Au niveau du train, la commande peut être déclenchée de manière automatisée, éventuellement après confirmation du conducteur du train, lors d'une étape 116.

Une nouvelle itération du procédé 100 peut alors être réalisée lors d'un autre passage d'un véhicule ferroviaire.

La FIGURE 2 est une représentation schématique d'un deuxième exemple de réalisation non limitatif du procédé selon l'invention.

Le procédé 200 de la FIGURE 2 comprend toutes les étapes du procédé 100 de la FIGURE 1.

A la différence du procédé 100 de la FIGURE 1, dans le procédé 200, l'étape d'analyse 106 est réalisée sur un site distant du site de captation des images.

Ainsi, le procédé 200 comprend, après l'étape 104 de captation des images, une étape 202 d'émission des images captées vers le site distant. Les étapes 106 et 108 sont réalisées sur le site distant.

Lorsque l'analyse signale un défaut, le site de captation reçoit la donnée de défaut lors d'une étape 204, réalisée après l'étape 108. Ensuite les étapes 110 à 116 sont réalisées.

Le site distant réalisant l'étape 106 d'analyse à la place du site de captation, peut être un site central commun à plusieurs sites de captation, ou un autre site de captation, auquel le site de captation est relié par une connexion sans fil.

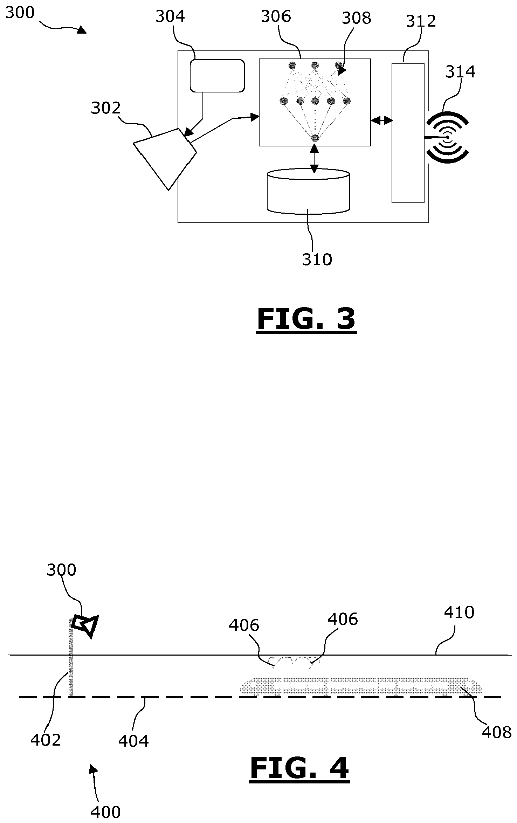

La FIGURE 3 est une représentation schématique d'un exemple de réalisation non limitatif d'un dispositif de détection selon l'invention.

Le dispositif de détection 300, représenté sur la FIGURE 3, est prévu pour être positionné au niveau d'un site de captation se trouvant le long d'une voie ferrée. Le dispositif 300 peut, par exemple, être agencé sur un poteau se trouvant en périphérie de la voie ferrée.

Le dispositif 300 comprend une caméra 302, prévue pour capter une ou des image(s) d'un pantographe d'un véhicule ferroviaire, tel qu'un train, lors du passage du véhicule ferroviaire au niveau du site de captation. La caméra 302 peut être programmée pour se mette en veille lorsqu'aucun véhicule ferroviaire ne passe au niveau du site de captation.

Pour détecter le passage d'un véhicule ferroviaire, le dispositif 300 peut comprendre un moyen de détection de présence, tel qu'un système neuronal entraîné pour détecter la présence d'un véhicule ferroviaire, ou tel qu'un accéléromètre 304 détectant les vibrations causées par le passage d'un véhicule ferroviaire. Ce moyen de détection de présence 304 peut être utilisé pour activer la caméra, se trouvant en mode veille, juste avant le passage d'un véhicule ferroviaire au niveau du site de captation.

Un processeur 306 est agencé dans le dispositif 300 pour exécuter un réseau neuronal 308 préalablement entraîné pour la détection de défaut(s) de pantographe. Ce processeur 306 est programmé pour recevoir les images captées par la caméra 302, et les fournir en entrée du réseau neuronal 308, de sorte que ce dernier fournit une donnée de défaut, signalant la présence ou non d'un défaut du pantographe du véhicule ferroviaire.

Le processeur 306 est programmé pour mémoriser les images captées par la caméra 302, dans une base de données 310, en association avec la donnée de défaut fournie par le réseau neuronal 308 pour ces images.

Le dispositif 300 comprend en outre un module de communication 312, couplé avec une antenne 314, pour communiquer de manière sans fil avec :
- un site central pour :
   ▪ émettre vers ledit site central les images captées par la caméra 302, et éventuellement la donnée de défaut fournie par le réseau neuronal 308 pour lesdites images, et/ou
   ▪ recevoir dudit site central un réseau neuronal mis à jour ;
   et/ou
- un autre dispositif de détection agencé sur un autre site de captation pour :
   ▪ émettre vers ledit autre dispositif de détection les images captées par la caméra 302, et
   ▪ recevoir une donnée de défaut déterminée par ledit autre dispositif de détection ;
- le véhicule ferroviaire pour signaler la présence d'un défaut et/ou émettre un signal de commande pour modifier le fonctionnement du véhicule et/ou la position du pantographe dudit véhicule.

La FIGURE 4 est une représentation schématique du dispositif 300 de la FIGURE 3 sur un site de captation.

Le site de captation 400 comprend un dispositif de détection, tel que par exemple le dispositif de détection 300, positionné sur un poteau 402 se trouvant en bordure d'une voie ferrée 404 pour détecter les défauts des pantographes 406 d'un véhicule ferroviaire 408 alimenté par une caténaire 410.

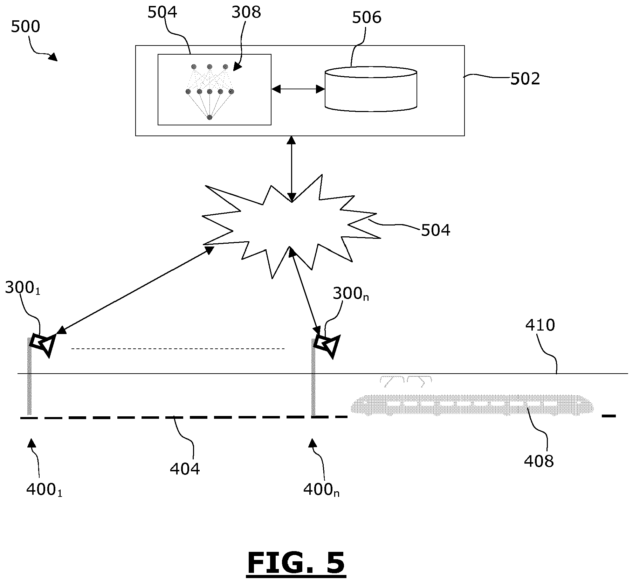

La FIGURE 5 est une représentation schématique d'un exemple de réalisation non limitatif d'un système selon l'invention.

Le système 500 comprend plusieurs sites de captation 400₁-400ₙ, équipés chacun d'au moins un dispositif de détection, respectivement 300₁-300ₙ. Les sites de captation 400₁-400ₙ sont par exemple distribués le long d'un réseau de voie ferrée.

Le système 500 comprend en outre un site central 502, en communication sans fil avec chaque dispositif de détection 300₁-300ₙ au travers d'un réseau de communication sans fil 504, tel que par exemple le réseau cellulaire.

Le site central 502 comprend un processeur 504 et une base de données 506 mémorisant une multitude d'images de pantographe en association avec des données de défaut(s) déterminées pour ces images. Ces images, ainsi que les données de défaut(s) qui leur sont associées, peuvent être obtenues lors de constatations préalables de défauts de pantographe ou en laboratoire.

Le processeur 504 est programmé pour entraîner un réseau neuronal, par exemple le réseau neuronal 308, à partir des images mémorisées dans la base de données 504 et des données de défaut(s) qui leur sont associées. Un tel entraînement est réalisé préalablement à la première utilisation des dispositifs de détection 300. Le réseau neuronal 308 entraîné est ensuite transmis à chaque dispositif de détection 300 de chaque site de captation 400, au travers du réseau de communication 504. Chaque dispositif de détection 300 de chaque site de captation 400 utilise donc un même réseau neuronal 308.

De plus, le site central 502 reçoit de chaque dispositif de détection 300 en cours d'utilisation, des images de pantographes et les données de défaut(s) associées à ces images. Ces images et les données de défaut(s) qui leur sont associées sont mémorisées dans la base de données 506. A fréquence régulière, ou sur requête d'un opérateur ou d'un des dispositifs de détection 300, le processeur 502 réalise une mise à jour du réseau neuronal 308 par un nouvel entraînement dudit réseau neuronal 308 avec les nouvelles images reçues et les nouvelles données de défaut(s) qui leur sont associées. Après mise à jour, le réseau neuronal 308 mis à jour est retransmis à chaque dispositif de détection 300 au travers du réseau de communication 504.

Ainsi, lorsqu'un défaut est détecté sur un premier site de captation, alors, un deuxième site de captation, se trouvant à des centaines de kilomètres dudit premier site de captation, bénéficie d'un apprentissage basé sur ladite détection alors même que le défaut en question n'a jamais été détecté sur ledit deuxième site de captation. Par conséquent, tous les sites de captation 400 bénéficient de l'«expérience » individuelle de chaque site de captation.

Bien entendu, l'invention n'est pas limitée aux exemples détaillés ci-dessus.

## Revendications

1. Procédé (100;200) de détection de défaut(s) d'un pantographe (406) d'un véhicule ferroviaire (408) en mouvement sur une voie ferrée (404), ledit procédé (100) comprenant au moins une itération d'une phase de détection comprenant les étapes suivantes :
- captation (104) d'au moins une image dudit pantographe (406) au niveau d'au moins un site (400), dit de captation, se trouvant le long de ladite voie ferrée (404), lors du passage dudit véhicule (408) ;
- analyse (106) de ladite image par un réseau neuronal (308) préalablement entraîné pour la détection de défaut(s) de pantographes à partir d'images de défaut(s) préalablement captées, ladite analyse (106) fournissant une donnée, dite de défaut, relative à la présence ou non d'un défaut au niveau dudit pantographe (406) ;
**caractérisé en ce que** le réseau neuronal (308) est mémorisé *in situ* au niveau du site de captation (400), l'étape (106) d'analyse étant réalisée *in situ* sur ledit site de captation (400).

2. Procédé (200) selon la revendication précédente, **caractérisé en ce que** la phase de détection comprend une transmission (202) de l'image du pantographe (406), captée par un premier site de captation (400), à un deuxième site de captation (400), ledit deuxième site de captation (400) réalisant une étape d'analyse pour vérifier le résultat de l'étape d'analyse (106) réalisée sur ledit premier site de captation (400).

3. Procédé (100;200) selon l'une quelconque des revendications précédentes, **caractérisé en ce qu'**il est mis en oeuvre sur plusieurs sites de captation (400₁-400ₙ), distribués le long de la voie ferrée (404), le réseau neuronal (308) utilisé étant commun à au moins deux, en particulier à l'ensemble, desdits sites captation (400₁-400ₙ).

4. Procédé (100;200) selon l'une quelconque des revendications précédentes, **caractérisé en ce que**, lorsque le réseau neuronal signale la présence d'un défaut, ledit procédé (100;200) comprend en outre une étape (110) de classification dudit défaut dans une classe parmi plusieurs classes prédéterminées.

5. Procédé (100;200) selon l'une quelconque des revendications précédentes, **caractérisé en ce qu'**il comprend une phase d'apprentissage, réalisant un entraînement du réseau neuronal à partir d'images de défauts de pantographe préalablement captées, ladite phase d'apprentissage étant réalisée préalablement à la première itération de la phase de détection.

6. Procédé (100;200) selon l'une quelconque des revendications précédentes, **caractérisé en ce qu'**il comprend au moins une itération d'une phase de mise à jour du réseau neuronal, réalisant une mise à jour du réseau neuronal (308) à partir de nouveaux défauts détectés.

7. Procédé (100;200) selon la revendication précédente, **caractérisé en ce que** la phase de mise à jour est réalisée à chaque détection de défaut ou à une fréquence prédéterminée.

8. Procédé (100;200) selon l'une quelconque des revendications 6 ou 7, **caractérisé en ce que** la phase de mise à jour est réalisée sur un site central (502) distant de chaque site de captation (400₁-400ₙ), le réseau neuronal mis à jour étant transmis vers chaque site de captation (400₁-400ₙ) après mise à jour.

9. Procédé selon l'une quelconque des revendications précédentes, **caractérisé en ce que** la phase de détection comprend en outre une étape d'analyse d'au moins un paramètre relatif audit véhicule à partir d'au moins une image dudit véhicule, choisi parmi les suivants :
- un numéro dudit véhicule,
- une composition dudit véhicule, ou
- un état dudit véhicule ou d'une voiture dudit véhicule.

10. Dispositif (300) de détection de défaut(s) d'un pantographe (406) d'un véhicule ferroviaire (408) en mouvement sur une voie ferrée (404), prévu pour être agencé sur un site de captation (400) se trouvant au niveau de ladite voie ferrée (404), ledit dispositif (300) comprenant :
- une caméra (302) pour capter au moins une image dudit pantographe (406) lors du passage dudit véhicule (408) par ledit site de captation (400) ;
- au moins un processeur (306) exécutant un réseau neuronal préalablement entraîné pour la détection de défaut(s) de pantographes à partir d'images de défaut(s) préalablement captées, pour analyser au moins une image captée et fournir une donnée une donnée, dite de défaut, relative à la présence ou non d'un défaut au niveau dudit pantographe (406).

11. Système (500) de détection de défaut(s) d'un pantographe (406) d'un véhicule ferroviaire (408) en mouvement sur une voie ferrée (404), comprenant au moins deux dispositifs de détection (300₁-300ₙ) selon la revendication précédente, agencés sur autant de sites de captation (400₁-400ₙ) distribués le long d'une voie ferrée (404).

12. Système (500) selon la revendication précédente, **caractérisé en ce qu'**au moins deux dispositifs de détection (300₁-300ₙ) communiquent entre eux de manière sans fil.

13. Système (500) selon l'une quelconque des revendications 11 ou 12, **caractérisé en ce qu'**au moins un dispositif de détection (300₁-300ₙ) communique, de manière sans fil, avec un site central (502).

14. Voie ferrée (404) équipée :
- d'au moins un dispositif (300) selon la revendication 10 ; ou
- d'un système (500) selon l'une quelconque des revendications 11-13.
